# EUROPÄISCHE PATENTSCHRIFT

(11) **EP 1 578 636 B1**
(45) Veröffentlichungstag und Bekanntmachung des Hinweises auf die Patenterteilung: **23.08.2006**
(21) Anmeldenummer: 03785703.4
(22) Anmeldetag: 02.12.2003
(51) Int. Cl.: B60W 30/20, B60W 10/02, B60W 10/06, B60W 10/10

(54) **VERFAHREN ZUR SCHALTSTEUERUNG EINES AUTOMATISIERTEN DOPPELKUPPLUNGSGETRIEBES**
METHOD FOR CONTROLLING THE SHIFTING OF AN AUTOMATED DUAL CLUTCH TRANSMISSION
PROCEDE POUR COMMANDER LE PROCESSUS DE CHANGEMENT DE VITESSE D'UNE BOITE DE VITESSES SEMI-AUTOMATIQUE A DOUBLE EMBRAYAGE

(30) Priorität: 20.12.2002 DE 10261872
(43) Veröffentlichungstag der Anmeldung: 28.09.2005
(73) Patentinhaber: Volkswagen Aktiengesellschaft, 38436 Wolfsburg (DE)
(72) Erfinder: BOTHE, Edgar, 31224 Peine (DE); HINRICHSEN, Uwe, 38124 Braunschweig (DE); SCHAMSCHA, Axel, 38542 Leiferde (DE)
(86) Internationale Anmeldenummer: PCT/EP2003/013526
(87) Internationale Veröffentlichungsnummer: WO 2004/058535

(56) Entgegenhaltungen:
- DE-A- 10 014 879
- DE-A- 10 058 043
- DE-A- 19 923 089
- US-A- 5 915 512
- US-A1- 2002 037 790

## Beschreibung

Die Erfindung betrifft ein Verfahren zur Schaltsteuerung eines automatisierten Doppelkupplungsgetriebes, umfassend ein erstes Teilgetriebe mit einer ersten Getriebeeingangswelle, einer ersten Motorkupplung, und einer ersten Gruppe von Gängen und ein zweites Teilgetriebe mit einer zweiten Getriebeeingangswelle, einer zweiten Motorkupplung, und einer zweiten Gruppe von Gängen, mit dem ein Schaltvorgang zwischen einem Lastgang und einem demselben Teilgetriebe zugeordneten Zielgang unter Nutzung eines dem anderen Teilgetriebe zugeordneten Zwischengangs als Mehrfachschaltung mit den Schaltschritten Einlegen des Zwischengangs, Kupplungswechsel von der Motorkupplung des Lastgangs zu der Motorkupplung des Zwischengangs, Auslegen des Lastgangs, Einlegen des Zielgangs, Kupplungswechsel von der Motorkupplung des Zwischengangs zu der Motorkupplung des Zielgangs durchgeführt wird, und mit dem die Motordrehzahl des zugeordneten Antriebsmotors zum Ende des Schaltvorgangs zu der Synchrondrehzahl des Zielgangs geführt wird.

US 5 915 512 zeigt einen Getriebe mit den Merkmalen des Oberbegriffs des Anspruchs 1

Die Bauart des Doppelkupplungsgetriebes ist seit längerem bekannt, beispielsweise aus der DE 35 46 454 A1, in der ein Gangschaltgetriebe für ein Kraftfahrzeug mit Doppelkupplung vorgeschlagen wird. Das Doppelkupplungsgetriebe weist eine erste Motorkupplung, eine erste Getriebeeingangswelle, und eine erste Gruppe von Gängen auf, die ein erstes Teilgetriebe bilden, und eine zweite Motorkupplung, eine zweite Getriebeeingangswelle, und eine zweite Gruppe von Gängen auf, die ein zweites Teilgetriebe bilden. Durch das Einlegen eines der Gänge ist die betreffende Getriebeeingangswelle mit einer gemeinsamen Getriebeausgangswelle verbindbar. Bei der üblichen wechselweisen Zuordnung der Gänge, bei der dem einen Teilgetriebe die geraden Gänge und dem anderen Teilgetriebe die ungeraden Gänge zugeordnet sind, besteht ein einfacher sequenzieller Schaltvorgang von einem eingelegten Lastgang in einen nächsthöheren oder nächstniedrigeren, d.h. jeweils dem anderen Teilgetriebe zugeordneten Zielgang zunächst, sofern es sich um eine passiv schließbare Kupplung handelt, in einem Öffnen der dem Teilgetriebe des Zielgangs zugeordneten Motorkupplung, in einem Einlegen des Zielgangs, und in einem anschließenden überschnittenen Öffnen der dem Teilgetriebe des Lastgangs zugeordneten Motorkupplung und Schließen der dem Teilgetriebe des Zielgangs zugeordneten Motorkupplung. Die Kraftübertragung erfolgt also abwechselnd über das erste Teilgetriebe mit der ersten Motorkupplung und der ersten Getriebeeingangswelle und über das zweite Teilgetriebe mit der zweiten Motorkupplung und der zweiten Getriebeeingangswelle, wobei als besonderer Vorteil beim Gangwechsel keine Zug- bzw. Schubkraftunterbrechung auftritt, weshalb das Doppelkupplungsgetriebe auch der Gattung der Lastschaltgetriebe zugeordnet wird. Da bei manueller Betätigung von zwei Motorkupplungen und der Schaltung der Gänge mit vorübergehend zwei gleichzeitig eingelegten Gängen ein erheblicher mechanischer Aufwand erforderlich wäre, sind Doppelkupplungsgetriebe, soweit bekannt, automatisiert ausgebildet, d.h. dass sowohl die Betätigung der Motorkupplungen als auch das Schalten der Gänge über zugeordnete Stellantriebe erfolgt, die elektromagnetisch, elektromotorisch, druckmittel-, wie z.B. hydraulisch, oder in anderer Weise betätigbar ausgebildet sein können.

In bestimmten Betriebssituationen, die im wesentlichen von einer plötzlichen Änderung der Fahrbahnneigung, z.B. einem Übergang von einer horizontal verlaufenden in eine steil ansteigende Straße, und / oder der Leistungsanforderung des Fahrers, z.B. einem schnellen Durchtreten des Fahrpedals zur Erzielung einer schnellen Beschleunigung (kick-down), abhängig sind, kann ein einfacher sequenzieller Schaltvorgang unter Umständen nicht mehr ausreichen, um die Anforderungen der Motor- und Getriebesteuerung und / oder des Fahrers zu erfüllen. In diesem Fall wird ein Schaltvorgang erforderlich, bei dem zumindest ein Gang übersprungen wird, d.h. der Lastgang und der Zielgang demselben Teilgetriebe zugeordnet sind. Um auch in diesem Fall eine Zug- bzw. Schubkraftunterbrechung zu vermeiden erfolgt ein derartiger Schaltvorgang bevorzugt unter Nutzung eines dem anderen Teilgetriebe zugeordneten Zwischengangs als sogenannte Mehrfachschaltung.

Um eine derartige Mehrfachschaltung so schnell wie möglich durchzuführen, wird die erforderliche Drehzahlanpassung, d.h. die Anpassung der Motordrehzahl an die in der zugeordneten Motorkupplung wirksame Synchrondrehzahl des Zielgangs, nach dem Stand der Technik schon während des Schaltvorgangs durchgeführt. Dabei wird ein Soll-Drehzahlgradient vorgegeben, nach dem die Motordrehzahl mittels der Motorsteuerung und / oder der Überschneidungssteuerung der Motorkupplungen zum Ende des Schaltvorgangs zu der Synchrondrehzahl des Zielgangs geführt wird. Entspricht der tatsächliche Schaltfortschritt, d.h. der zeitliche Ablauf der einzelnen Schaltschritte, und die daraus resultierende Gesamtschaltzeit der zu Grunde gelegten geschätzten Gesamtschaltzeit, so erreicht die Motordrehzahl die Synchrondrehzahl des Zielgangs exakt zu dem gewünschten Zeitpunkt. Bedingt durch wechselnde Betriebsbedingungen, insbesondere unterschiedliche Betriebstemperaturen, und durch Verschleiß an den Motorkupplungen und den Schalt- und Synchronisationselementen des Getriebes, können die Teilschaltzeiten der einzelnen Schaltschritte und somit auch die Gesamtschaltzeit der Mehrfachschaltung nicht exakt vorausbestimmt werden, so dass die Motordrehzahl die Synchrondrehzahl zumeist nicht zu dem gewünschten Zeitpunkt erreicht. Läuft der Schaltvorgang, d.h. die Durchführung der einzelnen Schaltschritte, schneller als erwartet ab, so eilt der Schaltungsablauf der Drehzahlanpassung voraus, d.h. am Ende des Schaltvorgangs muss eine Wartezeit in Kauf genommen werden, in der die Motordrehzahl noch die restliche Drehzahldifferenz zur Erreichung der Synchrondrehzahl durchfährt. Läuft der Schaltvorgang dagegen langsamer als erwartet ab, so eilt die Drehzahlanpassung dem Schaltungsablauf voraus, d.h. gegen Ende des Schaltvorgangs muss die Motordrehzahl auf der zu früh erreichten Synchrondrehzahl des Zielgangs verharren, bis der Schaltvorgang abgeschlossen ist. Im ersten Fall tritt eine echte Verzögerung des gesamtem Schaltungsablaufes ein, im zweiten Fall ist nur eine aufgrund der vorübergehend konstanten Motordrehzahl, von dem Fahrer möglicherweise als unangenehm empfundene, scheinbare Verzögerung des Schaltungsablaufes zu verzeichnen.

Es ist daher das Problem der vorliegenden Erfindung, ein Verfahren zur Steuerung eines derartigen, eingangs definierten Schaltungsablaufes anzugeben, mit dem die Drehzahlanpassung verbessert werden kann und die bekannten Mängel vermieden werden können.

Das Problem wird erfindungsgemäß in Verbindung mit dem Oberbegriff des Anspruchs 1 dadurch gelöst, dass zu Beginn des Schaltvorgangs (t = t₀) ein Anfangs-Soll-Drehzahlgradient (dn_{M}/dt)₀ vorgegeben wird, mit dem die Motordrehzahl n_{M} bei einer geschätzten Gesamtschaltzeit Δt_{SΣ}' die Synchrondrehzahl n_{MS} zum Ende des Schaltvorgangs erreicht, dass die Motordrehzahl n_{M} des Antriebsmotors zu Beginn des Schaltvorgangs zunächst nach dem vorgegebenen Anfangs-Soll-Drehzahlgradienten (dn_{M}/dt)₀ verändert wird, dass während des Schaltvorgangs der tatsächliche Schaltfortschritt ermittelt und mit dem geschätzten Schaltfortschritt verglichen wird, und dass der Soll-Drehzahlgradient dn_{M}/dt bei einer festgestellten Abweichung des Schaltfortschrittes an den tatsächlichen Schaltfortschritt angepasst wird.

Vorteilhafte Ausgestaltungen des erfindungsgemäßen Verfahrens sind in den Unteransprüchen 2 bis 12 aufgeführt.

Die Motordrehzahl n_{M} wird also zunächst nach dem vorgegebenen Anfangs-Soll-Drehzahlgradienten (dn_{M}/dt)₀ gesteuert oder geregelt zu der Synchrondrehzahl n_{MS} des Zielgangs geführt und erreicht diese zum gewünschten Zeitpunkt zum Ende des Schaltvorgangs, sofern der tatsächliche Schaltfortschritt, d.h. der zeitliche Ablauf des Schaltvorgangs bzw. der einzelnen Schaltschritte S1 - S5, dem geschätzten Schaltfortschritt entspricht. Kommt es aber, z.B. aufgrund von veränderten Betriebsbedingungen, wie extremen Betriebstemperaturen oder Verschleiß an Schalt- und Synchronisationselementen, zu Verzögerungen oder Beschleunigungen im Schaltungsablauf, so werden diese Abweichungen nach dem erfindungsgemäßen Verfahren erkannt und durch die Anpassung des Soll-Drehzahlgradienten dn_{M}/dt kompensiert. Bei einem im Vergleich zu dem geschätzten Schaltfortschritt festgestellten schnelleren Schaltfortschritt wird der Soll-Drehzahlgradient dn_{M}/dt demzufolge im Betrag vergrößert und bei einem festgestellten langsameren Schaltfortschritt im Betrag verringert. Somit wird bewirkt, dass die Motordrehzahl n_{M} die Synchrondrehzahl n_{MS} zum richtigen Zeitpunkt am Ende des Schaltvorgangs erreicht. Eine nach dem Stand der Technik bei einem schnelleren Schaltfortschritt übliche Wartezeit, bis die Motordrehzahl n_{M} die Synchrondrehzahl n_{MS} erreicht hat, wird somit vermieden. Im umgekehrten Fall wird ebenso eine nach dem Stand der Technik bei einem langsameren Schaltfortschritt übliche Phase, in der die Motordrehzahl n_{M} auf der Synchrondrehzahl n_{MS} weitgehend konstant gehalten werden muss, vermieden. Durch das erfindungsgemäße Verfahren wird sichergestellt, dass der Schaltungsablauf der eingangs erläuterten Mehrfachschaltung so schnell wie möglich und so komfortabel wie möglich abläuft. Das erfindungsgemäße Verfahren wird bevorzugt zur Durchführung einer Zugrückschaltung eingesetzt, ist jedoch auch bei einer Zughochschaltung, bei einer Schubrückschaltung, und bei einer Schubhochschaltung anwendbar.

Die Anpassung des Soll-Drehzahlgradienten dn_{M}/dt erfolgt zweckmäßig dadurch, dass der bislang gültige Soll-Drehzahlgradient dn_{M}/dt durch einen korrigierten Soll-Drehzahlgradienten (dn_{M}/dt)ₖₒᵣ ersetzt wird, mit dem die Motordrehzahl n_{M} bei einer geschätzten Restschaltzeit Δt_{SR}' die Synchrondrehzahl n_{MS} zum Ende des Schaltvorgangs erreicht.

Da eine kontinuierliche Überprüfung des Schaltfortschrittes und eine quasikontinuierliche Anpassung des Soll-Drehzahlgradienten dn_{M}/dt zu aufwendig wäre, wird die Ermittlung des Schaltfortschrittes und die bedarfsweise Anpassung des Soll-Drehzahlgradienten dn_{M}/dt vorteilhaft nach dem Ende jedes Schaltschrittes S1 - S4 durchgeführt. Da aber eine Korrektur des Soll-Drehzahlgradienten dn_{M}/dt nach dem letzten Schaltschritt S5 keinen Sinn mehr macht, erfolgt die Anpassung nur bis zum vorletzten Schaltschritt S4. Geringe Abweichungen der Motordrehzahl n_{M} von der Synchrondrehzahl n_{MS} am Ende des Schaltvorgangs, die auf Abweichungen des Schaltfortschrittes im letzten Schaltschritt S5 zurückzuführen sein können, müssen dabei in Kauf genommen werden.

Der Anfangs-Soll-Drehzahlgradient (dn_{M}/dt)₀ kann auf einfache Weise zu Beginn des Schaltvorgangs durch eine Erfassung der momentanen Motordrehzahl n_{M0} und der Synchrondrehzahl des Zielgangs n_{MS} und durch eine Quotientenbildung der Differenz zwischen der Synchrondrehzahl n_{MS} und der Anfangs-Motordrehzahl n_{M0} und einer vorab bekannten geschätzten Gesamtschaltzeit Δt_{SΣ}' ( (dn_{M}/dt)₀ = (n_{MS} - n_{M0}) / Δt_{SΣ}' ) ermittelt werden. Hierzu kann die geschätzte Gesamtschaltzeit Δt_{SΣ}' als Summe der geschätzten Teilschaltzeiten Δt_{Si}' der einzelnen Schaltschritte S1 - S5 berechnet werden ( Δt_{SΣ}' = Σ Δt_{Si}' , i=1 - 5 ). Die geschätzte Gesamtschaltzeit Δt_{SΣ}' und / oder die geschätzten Teilschaltzeiten Δt_{Si}' werden zweckmäßig zuvor, d.h. während der Entwicklung des betreffenden Doppelkupplungsgetriebes bzw. des Kraftfahrzeuges, in Prüfstand- und / oder Fahrversuchen ermittelt und in einem Getriebedatenspeicher abgelegt, aus dem sie bedarfsweise ausgelesen werden können.

In ähnlicher Weise kann der korrigierte Soll-Drehzahlgradient (dn_{M}/dt)ₖₒᵣ aus einfache Weise durch eine Erfassung der momentanen Motordrehzahl n_{M} und durch eine Quotientenbildung der Differenz zwischen der Synchrondrehzahl n_{MS} und der momentanen Motordrehzahl n_{M} und einer vorab bekannten geschätzten Restschaltzeit ΔT_{SR}' ((dn_{M}/dt)₀ = (n_{MS} - n_{M}) / Δt_{SR}') ermittelt werden. Hierzu kann bei diskontinuierlicher Vorgehensweise, d.h. einer Anpassung des Soll-Drehzahlgradienten dn_{M}/dt am Ende jedes Schaltschrittes S1 - S4, die geschätzte Restschaltzeit Δt_{SR}' als Summe der geschätzten Teilschaltzeiten Δt_{Si}' der einzelnen, noch ausstehenden Schaltschritte SI+1 - S5 berechnet werden (Δt_{SR}' = Σ Δt_{Si}', i=I+1 - 5 ).

Durch Einlaufvorgänge und Verschleiß an Schalt- und Synchronisationselementen in dem Doppelkupplungsgetriebe kann es im Laufe der Betriebszeit bzw. Lebensdauer zu dauerhaften Verschiebungen der Teilschaltzeiten Δt_{Si} und somit auch der Restschaltzeiten Δt_{SR} und der Gesamtschaltzeit Δt_{SΣ} kommen. Zur Vermeidung größerer Korrekturen des Soll-Drehzahlgradienten d_{nM}/dt, insbesondere während der ersten Schaltschritte, ist es daher sinnvoll, die abgespeicherten Werte der geschätzten Gesamtschaltzeit Δt_{SΣ}' und / oder der geschätzten Restschaltzeiten Δt_{SR}' und / oder der geschätzten Teilschaltzeiten Δt_{Si}' bei Abweichungen des Schaltfortschrittes mittels der Werte der tatsächlichen Schaltzeiten Δt_{SΣ} bzw. Δt_{SR} bzw. Δt_{Si} zu korrigieren. Ein derartige adaptive Korrektur kann im einfachsten Fall dadurch erzielt werden, dass die abgespeicherten Werte der geschätzten Schaltzeiten Δt_{SΣ}' bzw. Δt_{SR}' bzw. Δt_{Si}' durch die Werte der tatsächlichen Schaltzeiten Δt_{SΣ} bzw. Δt_{SR} bzw. Δt_{Si} ersetzt werden. Zur Eliminierung von statistischen Ausreißern ist es jedoch besser, wenn die abgespeicherten Werte der geschätzten Schaltzeiten Δt_{SΣ}' bzw. Δt_{SR}' bzw. Δt_{Si}' mittels einer Korrekturfunktion mit den Werten der tatsächlichen Schaltzeiten Δt_{SΣ} bzw. Δt_{SR} bzw. Δt_{Si} korrigiert werden.

Da der Kupplungswechsel von der Motorkupplung des Zwischengangs zu der Motorkupplung des Zielgangs bei konstanter Motordrehzahl n_{M} einfacher und schneller steuerbar ist, werden der Anfangs-Soll-Drehzahlgradient (dn_{M}/dt)₀ und die korrigierten Soll-Drehzahlgradienten (dn_{M}/dt)ₖₒᵣ zweckmäßig derart bestimmt, dass die Motordrehzahl n_{M} die Synchrondrehzahl n_{MS} zum Ende des vorletzten Schaltschrittes S4 erreicht. D.h. im Sinne der bisherigen Beschreibung des erfindungsgemäßen Verfahrens wird dann der vorletzte Schaltschritt S4 als letzter Schaltschritt und das Ende des vorletzten Schaltschrittes S4 als Ende des Schaltvorgangs angesehen.

Weitere Einzelheiten der Erfindung ergeben sich aus der nachfolgenden ausführlichen Beschreibung und den beigefügten Zeichnungen, die beispielhaft zur Erläuterung des erfindungsgemäßen Steuerungsverfahrens dienen.

Hierzu zeigen:
- Fig. 1: Den Motordrehzahlverlauf bei einem erfindungsgemäß gesteuerten Schaltungsvorgang in Form eines Zeitdiagramms, und
- Fig. 2: den Motordrehzahlverlauf bei einem nach dem Stand der Technik gesteuerten Schaltungsvorgang in Form eines Zeitdiagramms.

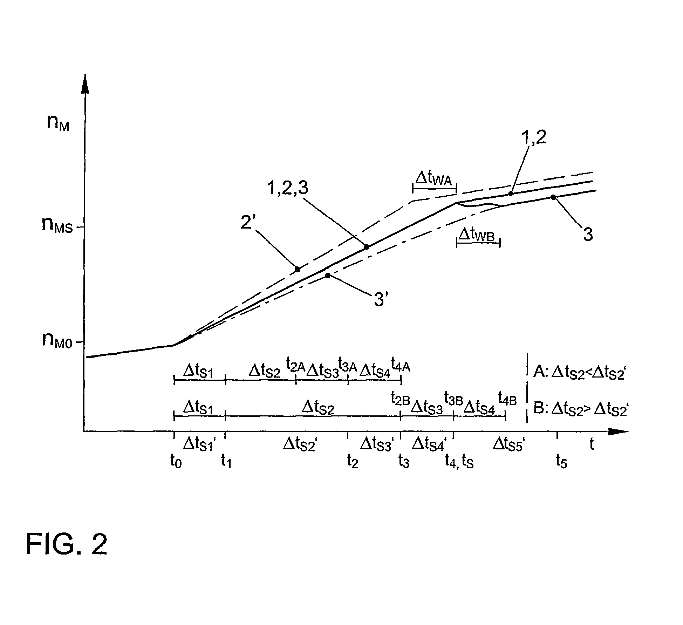

In Fig. 2 ist der zeitliche Ablauf eine Zugrückschaltung eines Doppelkupplungsgetriebes dargestellt, die als Mehrfachschaltung der eingangs definierten Art durchgeführt wird und nach dem Stand der Technik abläuft. Fig. 2 enthält hierzu den Verlauf der Motordrehzahl n_{M} eines zugeordneten Antriebsmotors über der Zeit t während des Schaltvorgangs, der insgesamt fünf Schaltschritte umfasst. Im ersten Schaltschritt S1 wird der Zwischengang eingelegt, im zweiten Schaltschritt S2 erfolgt der Kupplungswechsel von der Motorkupplung des Lastgangs zu der Motorkupplung des Zwischengangs, im dritten Schaltschritt S3 wird der Lastgang ausgelegt, im vierten Schaltschritt S4 wird der Zielgang eingelegt, und im fünften Schaltschritt S5 erfolgt der Kupplungswechsel von der Motorkupplung des Zwischengangs zu der Motorkupplung des Zielgangs. Da der letzte Kupplungswechsel bei konstanter Motordrehzahl einfacher und schneller gesteuert bzw. geregelt werden kann, ist vorgesehen, dass die Motordrehzahl n_{M} die Synchrondrehzahl n_{MS} des Zielgangs schon zum Ende des vorletzten Schaltschrittes S4 erreicht. Der letzte Kupplungswechsel kann dann bei nahezu konstanter Motordrehzahl, nämlich der Synchrondrehzahl n_{MS}, erfolgen.

Der Schaltvorgang beginnt zum Zeitpunkt t₀ und endet voraussichtlich zum Zeitpunkt t₅. Voraussetzung dafür ist allerdings, dass die einzelnen Schaltschritte S1 - S5 zeitlich wie vorgesehen ablaufen, d.h. S1 zwischen t₀ und t₁ mit der geschätzten Zeitdauer Δt_{S1}', S2 zwischen t₁ und t₂ mit der geschätzten Zeitdauer Δt_{S2}', usw., und damit der gesamte Schaltvorgang in der vorgesehen Zeitspanne Δt_{SΣ}' abläuft. Die vorgesehene Gesamtschaltzeit Δt_{SΣ}', die sich aus der Summe der vorgesehenen Teilschaltzeiten Δt_{Si}', i = 1 - 5 ergibt, ist nämlich neben der Drehzahldifferenz zwischen der Synchrondrehzahl n_{MS} und der Motordrehzahl zu Beginn des Schaltvorgangs n_{M0} die Grundlage für die Ermittlung eines Soll-Drehzahlgradienten dn_{M}/dt, nach dem die Motordrehzahl n_{M} während des Schaltvorgangs zu der Synchrondrehzahl n_{MS} geführt wird. Aufgrund des zuvor gesagten erfolgt die Drehzahlanpassung während der Schaltschritte S1 bis S4, d.h. im Sinne des Verfahrens ist der vorletzte Schaltschritt S4 als letzter Schaltschritt anzusehen (Δt_{SΣ}' = ΣΔt_{Si}', i = 1 - 4).

Entspricht der Schaltfortschritt, d.h. die tatsächliche Zeitdauer Δt_{Si} der einzelnen Schaltschritte S1 bis S4 oder die tatsächliche Gesamtschaltzeit Δt_{SΣ}, dem vorhergesehenen Schaltfortschritt, d.h. Δt_{Si} = Δt_{Si}' oder Δt_{SΣ} = Δt_{SΣ}', so erreicht die Motordrehzahl n_{M} mit dem Soll-Drehzahlgradienten dn_{M}/dt exakt zum gewünschten Zeitpunkt, nämlich zum Ende von Schaltschritt S4, die Synchrondrehzahl n_{MS} des Zielgangs (t_{S} = t₄). Der entsprechende Drehzahlverlauf wird durch Kurve 1 (durchgezogene Linie) wiedergegeben. Dieser Idealfall entspricht jedoch nur selten der Realität. Bedingt durch veränderte Betriebsbedingungen, wie unterschiedliche Betriebstemperaturen und Verschleiß an Schaltungs- und Synchronisationselementen des betreffenden Getriebes, kommt es in der Praxis zu Abweichungen des zeitlichen Ablaufes des Schaltvorgangs.

Vorliegend sind beispielhaft zwei derartige Fälle veranschaulicht. In Fall A läuft der gesamte Schaltvorgang schneller als erwartet ab, weil die tatsächliche Zeitdauer Δt_{S2} des zweiten Schaltschrittes S2 kürzer als erwartet ausfällt (Δt_{S2} < Δt_{S2}'). Demzufolge ist der vierte Schaltschritt S4 schon zum Zeitpunkt t_{4A} beendet, wogegen die Motordrehzahl n_{M} entsprechend Kurve 2 (= Kurve 1) die Synchrondrehzahl n_{MS} erst zum Zeitpunkt t₄ erreicht. Es entsteht also eine Wartezeit Δt_{WA}, in der der weitere Schaltungsablauf auf das Erreichen der Synchrondrehzahl n_{MS} warten muss. Der ideale Drehzahlverlauf (Wunsch) würde in diesem Fall durch Kurve 2' (gestrichelte Linie) wiedergegeben. In Fall B läuft der gesamte Schaltvorgang langsamer als erwartet ab, weil die tatsächliche Zeitdauer Δt_{S2} des zweiten Schaltschrittes S2 länger als erwartet ausfällt (Δt_{S2} > Δt_{S2}'). Demzufolge ist der vierte Schaltschritt S4 erst zum Zeitpunkt t_{4B} beendet, wogegen die Motordrehzahl n_{M} entsprechend Kurve 3 die Synchrondrehzahl n_{MS} schon zum Zeitpunkt t₄ erreicht. Die Motordrehzahl n_{M} muss in diesem Fall in etwa konstant auf der Synchrondrehzahl n_{MS} gehalten werden, bis der vierte Schaltschritt S4 abgeschlossen ist. Es entsteht dadurch zwar keine echte Verzögerung des Schaltungsablaufes, jedoch eine aufgrund der zeitweise konstanten Motordrehzahl von einem Fahrer empfundene, scheinbare Wartezeit Δt_{WB}. Der ideale Drehzahlverlauf (Wunsch) würde in diesem Fall durch Kurve 3' (strichpunktierte Linie) wiedergegeben.

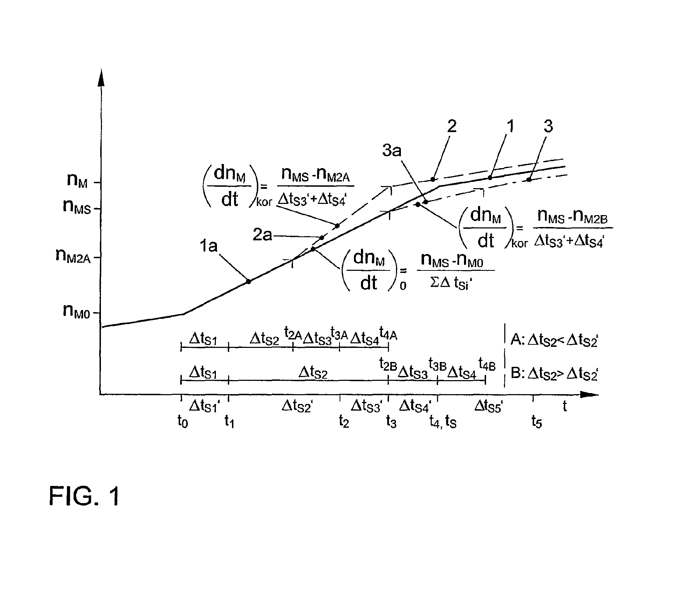

Demgegenüber läuft derselbe Schaltvorgang nach dem erfindungsgemäßen Verfahren wie in Fig. 1 dargestellt ab. Zunächst wird ein Anfangs-Soll-Drehzahlgradient (dn_{M}/dt)₀ vorgegeben, mit dem die Motordrehzahl n_{M} bei Einhaltung der geschätzten Gesamtschaltzeit Δt_{SΣ}' die Synchrondrehzahl n_{MS} zum Ende des Schaltvorgangs, d.h. vorliegend am Ende des vierten Schaltschrittes S4, exakt erreicht (siehe Kurve 1, 1a / durchgezogenen Linie). Nach diesem Anfangs-Soll-Drehzahlgradienten (dn_{M}/dt)₀, der wie angegeben als Quotient der Differenz zwischen der Synchrondrehzahl n_{MS} und der Anfangs-Motordrehzahl n_{M0} und einer vorab bekannten geschätzten Gesamtschaltzeit Δt_{SΣ}' berechnet werden kann ((dn_{M}/dt)₀ = (n_{MS} - n_{M0}) / Δt_{SΣ}' ),.wird die Motordrehzahl n_{M} des Antriebsmotors zu Beginn des Schaltvorgangs verändert. Nach dem Ende jedes Schaltrittes S1 - S3 wird der tatsächliche Schaltfortschritt ermittelt und mit dem geschätzten Schaltfortschritt verglichen. Bei einer festgestellten Abweichung des Schaltfortschrittes von dem geschätzten Schaltfortschritt, d.h. einer wesentlichen Abweichung der tatsächlichen Teilschaltzeit Δt_{Si} von der geschätzten Teilschaltzeit Δt_{Si}' des gerade beendeten Schaltschrittes, wird der Soll-Drehzahlgradient dn_{M}/dt, der anfänglich identisch mit dem Anfangs-Soll-Drehzahlgradienten (dn_{M}/dt)₀ ist, an den tatsächlichen Schaltfortschritt angepasst. Dies geschieht zweckmäßig dadurch, dass der bislang gültige Soll-Drehzahlgradient dn_{M}/dt durch einen korrigierten Soll-Drehzahlgradienten (dn_{M}/dt)ₖₒᵣ ersetzt wird, mit dem die Motordrehzahl n_{M} bei Einhaltung einer geschätzten Restschaltzeit Δt_{SR}' die Synchrondrehzahl n_{MS} zum Ende des Schaltvorgangs erreicht.

Vorliegend sind zur Veranschaulichung des erfindungsgemäßen Verfahrens in Fig. 1 beispielhaft dieselben zwei Fälle dargestellt wie zuvor in Fig. 2 für den Stand der Technik. In Fall A läuft der gesamte Schaltvorgang schneller als erwartet ab, weil die tatsächliche Zeitdauer Δt_{S2} des zweiten Schaltschrittes S2 kürzer als erwartet ausfällt (Δt_{S2} < Δt_{S2}'). Diese Abweichung wird nun aber nach dem Abschluss des zweiten Schaltschrittes S2 zum Zeitpunkt t_{2A} festgestellt. Daraufhin wird der bislang gültige Soll-Drehzahlgradient, nach dem die Motordrehzahl bislang verändert wurde, durch einen korrigierten Soll-Drehzahlgradienten (dn_{M}/dt)ₖₒᵣ ersetzt, mit dem die Motordrehzahl n_{M} entsprechend Kurve 2a (gestrichelte Linie) die Synchrondrehzahl n_{MS} exakt zu dem gewünschten Zeitpunkt t_{4A} erreicht, zu dem der Schaltvorgang (ohne den fünften Schaltschritt S5) vorzeitig beendet ist. Der korrigierte Soll-Drehzahlgradient (dn_{M}/dt)ₖₒᵣ ist im Betrag größer und kann, wie angegeben, als Quotient der Differenz zwischen der Synchrondrehzahl n_{MS} und der momentanen Motordrehzahl n_{M2A} und einer vorab bekannten geschätzten Restschaltzeit ΔT_{SR}' berechnet werden ( (dn_{M}/dt)ₖₒᵣ = (n_{MS} - n_{M2A}) / Δt_{SR}' ), wobei sich die geschätzte Restschaltzeit Δt_{SR}' vorliegend aus der Summe der geschätzten Teilschaltzeiten der Schaltschritte S3 und S4 ergibt (ΔT_{SR}' = Δt_{S3}' + Δt_{S4}' ).

Eine nach dem Stand der Technik übliche Wartezeit Δt_{WA} (siehe Fig. 2), in der weitere Schaltungsablauf auf das Erreichen der Synchrondrehzahl n_{MS} warten muss, wird nunmehr vermieden. Der tatsächliche Drehzahlverlauf für Fall A ergibt sich aus der Aneinanderreihung der Teilkurven 1a, 2a, und 2.

In Fall B läuft der gesamte Schaltvorgang langsamer als erwartet ab, weil die tatsächliche Zeitdauer Δt_{S2} des zweiten Schaltschrittes S2 länger als erwartet ausfällt (Δt_{S2} > Δt_{S2}'). Die auftretende Abweichung wird wiederum nach dem Abschluss des zweiten Schaltschrittes S2 zum Zeitpunkt t_{2B} festgestellt. Daraufhin wird der bislang gültige Soll-Drehzahlgradient durch einen korrigierten Soll-Drehzahlgradienten (dn_{M}/dt)ₖₒᵣ ersetzt, mit dem die Motordrehzahl n_{M} entsprechend Kurve 3a (strichpunktierte Linie) die Synchrondrehzahl n_{MS} exakt zu dem gewünschten Zeitpunkt t_{4B} erreicht, zu dem der Schaltvorgang (ohne den fünften Schaltschritt S5) verspätet beendet ist. Der korrigierte Soll-Drehzahlgradient (dn_{M}/dt)ₖₒᵣ ist im Betrag verkleinert und kann wie zuvor als Quotient der Differenz zwischen der Synchrondrehzahl n_{MS} und der momentanen Motordrehzahl n_{MB} und der vorab bekannten geschätzten Restschaltzeit Δt_{SR}' berechnet werden ( (dn_{M}/dt)ₖₒᵣ = (n_{MS} - n_{M2B}) / Δt_{SR}' ). Eine nach dem Stand der Technik übliche scheinbare Wartezeit Δt_{WA} (siehe Fig. 2), in der die Motordrehzahl n_{MS} weitgehend konstant gehalten werden muss, um das Ende des Schaltvorgangs bzw. den Abschluss des vierten Schaltschrittes S4 abzuwarten, wird nun ebenfalls vermieden. Der tatsächliche Drehzahlverlauf ergibt sich jetzt durch die Aneinanderreihung der Teilkurven 1 a, 3a, und 3.

Durch die Anwendung des erfindungsgemäßen Steuerungsverfahrens, das eine Überprüfung des Schaltfortschrittes und eine bedarfsweise Anpassung bzw. Korrektur des Soll-Drehzahlgradienten dn_{M}/dt zumindest nach jedem Schaltschritt vorsieht, kann somit erreicht werden, dass bei einem Doppelkupplungsgetriebe bei einer Mehrfachschaltung der eingangs definierten Art der Schaltvorgang selbst, d.h. das Ein- und Auslegen der beteiligten Gänge und der erste Kupplungswechsel, und die parallel ablaufende Drehzahlanpassung weitgehend gleichzeitig beendet werden.

### BEZUGSZEICHENLISTE

- n_{M}: Motordrehzahl
- n_{M0}: n_{M} zu Beginn des Schaltvorgangs
- n_{M2A}: n_{M} zum Ende von Schaltschritt S2 im Fall A
- n_{M2B}: n_{M} zum Ende von Schaltschritt S2 im Fall B
- n_{MS}: Synchrondrehzahl
- S1: erster Schaltschritt
- S2: zweiter Schaltschritt
- S3: dritter Schaltschritt
- S4: vierter Schaltschritt
- S5: fünfter Schaltschritt
- SI: i-ter Schaltschritt, aktueller Schaltschritt
- SI+1: (i+1 )-ter Schaltschritt, nächster Schaltschritt
- t: Zeit
- t₀: t zu Beginn des Schaltvorgangs
- t₁: t zum Ende von S1 (geschätzt)
- t₂: t zum Ende von S2 (geschätzt)
- t_{2A}: t zum Ende von S2 (ist, Fall A)
- t_{2B}: t zum Ende von S2 (ist, Fall B)
- t₃: t zum Ende von S3 (geschätzt)
- t_{3A}: t zum Ende von S3 (ist, Fall A)
- t_{3B}: t zum Ende von S3 (ist, Fall B)
- t₄: t zum Ende von S4 (geschätzt)
- t_{4A}: t zum Ende von S4 (ist, Fall A)
- t_{4B}: t zum Ende von S4 (ist, Fall B)
- t₅: t zum Ende von S5 (geschätzt)
- t_{S}: t, zu dem n_{MS} erreicht wird
- Δt_{S1}: Zeitdauer von S1 (ist)
- Δt_{S1}': Zeitdauer von S1 (geschätzt)
- Δt_{S2}: Zeitdauer von S2 (ist)
- Δt_{S2}': Zeitdauer von S2 (geschätzt)
- Δt_{S3}: Zeitdauer von S3 (ist)
- Δt_{S3}': Zeitdauer von S3 (geschätzt)
- Δt_{S4}: Zeitdauer von S4 (ist)
- Δt_{S4}': Zeitdauer von S4 (geschätzt)
- Δt_{S5}': Zeitdauer von S5 (geschätzt)
- Δt_{Si}: Zeitdauer des i-ten Schaltschrittes (ist)
- Δt_{Si}': Zeitdauer des i-ten Schaltschrittes (geschätzt)
- Δt_{SR}: Zeitdauer der restlichen Schaltschritte, Restschaltzeit (ist)
- Δt_{SR}': Zeitdauer der restlichen Schaltschritte, Restschaltzeit (geschätzt)
- Δt_{SΣ}: Zeitdauer aller Schaltschritte, Gesamtschaltzeit (ist)
- Δt_{SΣ}': Zeitdauer aller Schaltschritte, Gesamtschaltzeit (geschätzt)
- Δt_{WA}: Wartezeit im Fall A
- ΔT_{WB}: (scheinbare) Wartezeit im Fall B
- dn_{M}/dt: Soll-Drehzahlgradient
- (dn_{M}/dt)₀: Anfangs-Soll-Drehzahlgradient
- (dn_{M}/dt)ₖₒᵣ: korrigierter Soll-Drehzahlgradient

## Patentansprüche

1. Verfahren zur Schaltsteuerung eines automatisierten Doppelkupplungsgetriebes, umfassend ein erstes Teilgetriebe mit einer ersten Getriebeeingangswelle, einer ersten Motorkupplung, und einer ersten Gruppe von Gängen und ein zweites Teilgetriebe mit einer zweiten Getriebeeingangswelle, einer zweiten Motorkupplung, und einer zweiten Gruppe von Gängen, mit dem ein Schaltvorgang zwischen einem Lastgang und einem demselben Teilgetriebe zugeordneten Zielgang unter Nutzung eines dem anderen Teilgetriebe zugeordneten Zwischengangs als Mehrfachschaltung mit den Schaltschritten
- S1: Einlegen des Zwischengangs
- S2: Kupplungswechsel von der Motorkupplung des Lastgangs zu der Motorkupplung des Zwischengangs
- S3: Auslegen des Lastgangs
- S4: Einlegen des Zielgangs
- S5: Kupplungswechsel von der Motorkupplung des Zwischengangs zu der Motorkupplung des Zielgangs
durchgeführt wird, und mit dem die Motordrehzahl n_{M} des zugeordneten Antriebsmotors zum Ende des Schaltvorgangs zu der Synchrondrehzahl n_{MS} des Zielgangs geführt wird, **dadurch gekennzeichnet, dass** zu Beginn des Schaltvorgangs (t = t₀) ein Anfangs-Soll-Drehzahlgradient (dn_{M}/dt)₀ vorgegeben wird, mit dem die Motordrehzahl n_{M} bei einer geschätzten Gesamtschaltzeit Δt_{SΣ}' die Synchrondrehzahl n_{MS} zum Ende des Schaltvorgangs erreicht, dass die Motordrehzahl n_{M} des Antriebsmotors zu Beginn des Schaltvorgangs zunächst nach dem vorgegebenen Anfangs-Soll-Drehzahlgradienten (dn_{M}/dt)₀ verändert wird, dass während des Schaltvorgangs der tatsächliche Schaltfortschritt ermittelt und mit dem geschätzten Schaltfortschritt verglichen wird, und dass der Soll-Drehzahlgradient dn_{M}/dt bei einer festgestellten Abweichung des Schaltfortschrittes an den tatsächlichen Schaltfortschritt angepasst wird.

2. Verfahren nach Anspruch 1, **dadurch gekennzeichnet, dass** die Anpassung des Soll-Drehzahlgradienten dn_{M}/dt **dadurch** erfolgt, dass der bislang gültige Soll-Drehzahlgradient dn_{M}/dt durch einen korrigierten Soll-Drehzahlgradienten (dn_{M}/dt)ₖₒᵣ ersetzt wird, mit dem die Motordrehzahl n_{M} bei einer geschätzten Restschaltzeit Δt_{SR}' die Synchrondrehzahl n_{MS} zum Ende des Schaltvorgangs erreicht.

3. Verfahren nach Anspruch 1 oder 2, **dadurch gekennzeichnet, dass** die Ermittlung des Schaltfortschrittes und die bedarfsweise Anpassung des Soll-Drehzahlgradienten dn_{M}/dt mit Ausnahme des letzten Schaltschrittes S5 nach dem Ende jedes Schaltschrittes S1 - S4 erfolgt.

4. Verfahren nach einem der Ansprüche 1 bis 3, **dadurch gekennzeichnet, dass** zur Ermittlung des Anfangs-Soll-Drehzahlgradienten (dn_{M}/dt)₀ zu Beginn des Schaltvorgangs die momentane Motordrehzahl n_{M0} und die Synchrondrehzahl des Zielgangs n_{MS} erfasst werden, und dass der Anfangs-Soll-Drehzahlgradient als Quotient der Differenz zwischen der Synchrondrehzahl n_{MS} und der Anfangs-Motordrehzahl n_{M0} und einer vorab bekannten geschätzten Gesamtschaltzeit Δt_{SΣ}' berechnet wird ((dn_{M}/dt)₀ = (n_{MS} - n_{M0}) / Δt_{SΣ}').

5. Verfahren nach Anspruch 4, **dadurch gekennzeichnet, dass** die geschätzte Gesamtschaltzeit Δt_{SΣ}' als Summe der geschätzten Teilschaltzeiten Δt_{Si}' der einzelnen Schaltschritte S1 - S5 berechnet wird (Δt_{SΣ}' = Σ Δt_{Si}' , i=1 - 5).

6. Verfahren nach Anspruch 4 oder 5, **dadurch gekennzeichnet, dass** die geschätzte Gesamtschaltzeit Δt_{SΣ}' und / oder die geschätzten Teilschaltzeiten Δt_{Si}' zuvor in Prüfstand- und / oder Fahrversuchen ermittelt und in einem Getriebedatenspeicher abgelegt werden.

7. Verfahren nach einem der Ansprüche 1 bis 6, **dadurch gekennzeichnet, dass** zur Ermittlung des korrigierten Soll-Drehzahlgradienten (dn_{M}/dt)ₖₒᵣ die momentane Motordrehzahl n_{M} erfasst wird, und dass der korrigierte Soll-Drehzahlgradient (dn_{M}/dt)ₖₒᵣ als Quotient der Differenz zwischen der Synchrondrehzahl n_{MS} und der momentanen Motordrehzahl n_{M} und einer vorab bekannten geschätzten Restschaltzeit Δt_{SR}' berechnet wird ( (dn_{M}/dt)ₖₒᵣ = (n_{MS} - n_{M}) / Δt_{SR}').

8. Verfahren nach Anspruch 3 und 7, **dadurch gekennzeichnet, dass** die geschätzte Restschaltzeit Δt_{SR}' als Summe der geschätzten Teilschaltzeiten Δt_{Si}' der einzelnen, noch ausstehenden Schaltschritte SI⁺1 - S5 berechnet wird (Δt_{SR}' = Σ Δt_{Si}' , i=I+1 - 5).

9. Verfahren nach einem der Ansprüche 1 bis 8, **dadurch gekennzeichnet, dass** die abgespeicherten Werte der geschätzten Gesamtschaltzeit Δt_{SΣ}' und / oder der geschätzten Restschaltzeiten Δt_{SR}' und / oder der geschätzten Teilschaltzeiten Δt_{Si}' bei Abweichungen des Schaltfortschrittes mittels der Werte der tatsächlichen Schaltzeiten Δt_{SΣ} bzw. ΔT_{SR} bzw. Δt_{Si} korrigiert werden.

10. Verfahren nach Anspruch 9, **dadurch gekennzeichnet, dass** die abgespeicherten Werte der geschätzten Schaltzeiten Δt_{SΣ}' bzw. ΔT_{SR}' bzw. Δt_{Si}' durch die Werte der tatsächlichen Schaltzeiten Δt_{SΣ} bzw. Δt_{SR} bzw. Δt_{Si} ersetzt werden.

11. Verfahren nach Anspruch 9, **dadurch gekennzeichnet, dass** die abgespeicherten Werte der geschätzten Schaltzeiten Δt_{SΣ}' bzw. ΔT_{SR}' bzw. Δt_{Si}' mittels einer Korrekturfunktion mit den Werten der tatsächlichen Schaltzeiten Δt_{SΣ} bzw. Δt_{SR} bzw. Δt_{Si} korrigiert werden.

12. Verfahren nach einem der Ansprüche 1 bis 11, **dadurch gekennzeichnet, dass** der Anfangs-Soll-Drehzahlgradient (dn_{M}/dt)₀ und die korrigierten Soll-Drehzahlgradienten (dn_{M}/dt)ₖₒᵣ derart bestimmt werden, dass die Motordrehzahl n_{M} die Synchrondrehzahl n_{MS} zum Ende des vorletzten Schaltschrittes S4 erreicht.

## Claims

1. Method for shift control of an automated dual clutch transmission, comprising a first partial transmission with a first transmission input shaft, a first engine clutch and a first group of gears, and comprising a second partial transmission with a second transmission input shaft, a second engine clutch and a second group of gears, by means of which method a shift process is carried out between a load gear and a target gear, which is associated with the same partial transmission, using an intermediate gear, which is associated with the other partial transmission, as a multiple shift operation having the shift steps
- S1: engagement of the intermediate gear
- S2: clutch change from the engine clutch of the load gear to the engine clutch of the intermediate gear
- S3: disengagement of the load gear
- S4: engagement of the target gear
- S5: clutch change from the engine clutch of the intermediate gear to the engine clutch of the target gear,
and by means of which method the engine speed n_{M} of the associated drive engine is guided to the synchronous speed n_{MS} of the target gear towards the end of the shift process, **characterized in that** at the beginning of the shift process (t = t₀), an initial nominal speed gradient (dn_{M}/dt)₀ is predefined, with which the engine speed n_{M} at an estimated total shift time Δt_{SΣ}' reaches the synchronous speed n_{MS} towards the end of the shift process, **in that** the engine speed n_{M} of the drive engine is initially varied at the beginning of the shift process according to the predefined initial nominal speed gradient (dn_{M}/dt)₀, **in that**, during the shift process, the actual shift progress is detected and compared with the estimated shift progress, and **in that** the nominal speed gradient dn_{M}/dt is adapted to the actual shift progress in the event of a determined deviation in the shift progress.

2. Method according to Claim 1, **characterized in that** the nominal speed gradient dn_{M}/dt is adapted **in that** the nominal speed gradient dn_{M}/dt which has hitherto applied is replaced by a corrected nominal speed gradient (dn_{M}/dt)_{cor}, with which the engine speed n_{M} at an estimated remaining shift time Δt_{SR}' reaches the synchronous speed n_{MS} towards the end of the shift process.

3. Method according to Claim 1 or 2, **characterized in that** the determination of the shift progress and, when required, the adaptation of the nominal speed gradient dn_{M}/dt take place after the end of each shift step S1 - S4 with the exception of the last shift step S5.

4. Method according to one of Claims 1 to 3, **characterized in that** the instantaneous engine speed n_{M0} and the synchronous speed of the target gear n_{MS} are detected in order to determine the initial nominal speed gradient (dn_{M}/dt)₀ at the beginning of the shift process, and **in that** the initial nominal speed gradient is calculated as the quotient formed from the difference between the synchronous speed n_{MS} and the initial engine speed n_{M0} and a previously known, estimated total shift time Δt_{SΣ}' ((dn_{M}/dt)₀ = (n_{MS} - n_{M0})/Δt_{SΣ}').

5. Method according to Claim 4, **characterized in that** the estimated total shift time Δt_{SΣ}' is calculated as the sum of the estimated partial shift times Δt_{Si}' of the individual shift steps S1 - S5 (Δt_{SΣ}' = Σ Δt_{Si}', i = 1 - 5).

6. Method according to Claim 4 or 5, **characterized in that** the estimated total shift time Δt_{SΣ}' and/or the estimated partial shift times Δt_{Si}' are determined previously in test bench and/or driving trials and are stored in a transmission data store.

7. Method according to one of Claims 1 to 6, **characterized in that** the instantaneous engine speed n_{M} is detected in order to determine the corrected nominal speed gradient (dn_{M}/dt)_{cor}, and **in that** the corrected nominal speed gradient (dn_{M}/dt)_{cor} is calculated as the quotient formed from the difference between the synchronous speed n_{MS} and the instantaneous engine speed n_{M} and a previously known, estimated remaining shift time Δt_{SR}' ((dn_{M}/dt)_{cor} = (n_{MS} - n_{M})/Δt_{SR}').

8. Method according to Claims 3 and 7, **characterized in that** the estimated remaining shift time Δt_{SR}' is calculated as the sum of the estimated partial shift times Δt_{Si}' of the individual shift steps SI+1 - S5 which are still outstanding (Δt_{SR}' = Σ Δt_{Si}', i = I+1 - 5).

9. Method according to one of Claims 1 to 8, **characterized in that** the stored values of the estimated total shift time Δt_{SΣ}' and/or of the estimated remaining shift times Δt_{SR}' and/or of the estimated partial shift times Δt_{Si}' are corrected by means of the values of the respective actual shift times Δt_{SΣ} or Δt_{SR} or Δt_{Si} in the event of deviations in the shift progress.

10. Method according to Claim 9, **characterized in that** the stored values of the estimated shift times Δt_{SΣ}' or ΔT_{SR}' or Δt_{Si}' are replaced by the values of the respective actual shift times Δt_{SΣ} or ΔT_{SR} or Δt_{Si}.

11. Method according to Claim 9, **characterized in that** the stored values of the estimated shift times Δt_{SΣ}' or ΔT_{SR}' or Δt_{Si}' are corrected by means of a correcting function with the values of the respective actual shift times Δt_{SΣ} or Δt_{SR} or Δt_{Si}.

12. Method according to one of Claims 1 to 11, **characterized in that** the initial nominal speed gradient (dn_{M}/dt)₀ and the corrected nominal speed gradient (dn_{M}/dt)_{cor} are determined in such a way that the engine speed n_{M} reaches the synchronous speed n_{MS} towards the end of the penultimate shift step S4.

## Revendications

1. Procédé de commande du changement de vitesses d'une boîte de vitesses automatisée à double embrayage, comprenant une première boîte de vitesses partielle avec un premier arbre d'entrée de boîte de vitesses, un premier embrayage moteur et un premier groupe de vitesses et une deuxième boîte de vitesses partielle avec un deuxième arbre d'entrée de boîte de vitesses, un deuxième embrayage moteur et un deuxième groupe de vitesses, avec lequel une opération de changement de vitesses est effectuée entre une vitesse en charge et une vitesse cible associée à la même boîte de vitesses partielle en utilisant une vitesse intermédiaire associée à l'autre boîte de vitesses partielle en tant que sélection multiple, avec les étapes de sélection suivantes :
- S1 : enclenchement de la vitesse intermédiaire,
- S2 : changement d'embrayage de l'embrayage moteur de la vitesse en charge à l'embrayage moteur de la vitesse intermédiaire;
- S3 : sortie de la vitesse en charge
- S4 : enclenchement de la vitesse cible
- S5 : changement d'embrayage de l'embrayage moteur de la vitesse intermédiaire à l'embrayage moteur de la vitesse cible,
et avec lequel la vitesse du moteur n_{M} du moteur d'entraînement associé est amenée vers la fin de l'opération de changement de vitesses à la vitesse synchrone n_{MS} de la vitesse cible, **caractérisé en ce qu'**au début de l'opération de changement de vitesses (t = t₀), un gradient de vitesse de consigne de départ (dn_{M}/dt)₀ est prédéfini, avec lequel la vitesse du moteur n_{M} atteint la vitesse synchrone n_{MS} vers la fin de l'opération de changement de vitesses en un temps de changement de vitesses total estimé Δt_{SΣ'}, **en ce que** la vitesse du moteur n_{M} du moteur d'entraînement est modifiée au début de l'opération de changement de vitesses d'abord en fonction du gradient de vitesse de consigne de départ prédéfini (dn_{M}/dt)₀, **en ce que** pendant l'opération de changement de vitesses, le progrès du changement de vitesses effectif est détecté et est comparé au progrès de changement de vitesses estimé, et **en ce que** le gradient de vitesse de consigne dn_{M}/dt est adapté au progrès de changement de vitesses effectif en cas de détection d'un écart par rapport au progrès de changement de vitesse.

2. Procédé selon la revendication 1, **caractérisé en ce que** l'adaptation du gradient de vitesse de consigne dn_{M}/dt s'effectue de telle sorte que le gradient de vitesse de consigne valable jusqu'alors dn_{M}/dt est remplacé par un gradient de vitesse de consigne corrigé (dn_{M}/dt)ₖₒᵣ, avec lequel la vitesse du moteur n_{M} atteint la vitesse synchrone n_{MS} vers la fin de l'opération de changement de vitesses en un temps de changement de vitesses restant estimé Δt_{SR'}.

3. Procédé selon la revendication 1 ou 2, **caractérisé en ce que** la détection du progrès du changement de vitesses et l'adaptation au besoin du gradient de vitesse de consigne dn_{M}/dt à l'exception de la dernière étape de changement de vitesses S5 s'effectue après la fin de chaque étape de changement de vitesses S1 - S4.

4. Procédé selon l'une quelconque des revendications 1 à 3, **caractérisé en ce que** pour détecter le gradient de vitesse de consigne de départ (dn_{M}/dt)₀ au début de l'opération de changement de vitesse, on détermine la vitesse du moteur momentanée n_{M0} et la vitesse synchrone de la vitesse cible n_{MS}, et **en ce que** le gradient de vitesse de consigne de départ est calculé comme le quotient de la différence entre la vitesse synchrone n_{MS} et la vitesse du moteur de départ n_{M0} et un temps de changement de vitesses total estimé connu préalablement Δt_{SΣ}, ((dn_{M}/dt)₀ = (n_{MS} - n_{M0})/Δt_{SΣ'}).

5. Procédé selon la revendication 4, **caractérisé en ce que** le temps de changement de vitesses total estimé Δt_{SΣ'} est calculé comme la somme des temps de changement de vitesses partiels estimés Δt_{Si'} des étapes de changement de vitesses individuelles S1-S5 (Δt_{SΣ'} = ΣΔt_{Si'}, i = 1-5).

6. Procédé selon la revendication 4 ou 5, **caractérisé en ce que** le temps de changement de vitesses total estimé Δt_{SΣ'} et/ou les temps de changement de vitesses partiels estimés Δt_{Si'} sont détectés préalablement au cours de tests sur banc d'essai et/ou de tests de conduite et sont saisis dans une mémoire de données de boîte de vitesses.

7. Procédé selon l'une quelconque des revendications 1 à 6, **caractérisé en ce que** pour déterminer le gradient de vitesse de consigne corrigé (dn_{M}/dt)ₖₒᵣ, on détecte la vitesse momentanée du moteur n_{M}, et **en ce que** le gradient de vitesse de consigne corrigé (dn_{M}/dt)ₖₒᵣ est calculé comme le quotient de la différence entre la vitesse synchrone n_{MS} et la vitesse du moteur momentanée n_{M} et un temps de changement de vitesses restant estimé ΔT_{SR'} connu préalablement ((dn_{M}/dt)ₖₒᵣ = (n_{MS} - n_{M})/Δt_{SR'}).

8. Procédé selon les revendications 3 et 7, **caractérisé en ce que** le temps de changement de vitesses restant estimé Δt_{SR'} est calculé comme la somme des temps de changement de vitesses partiels estimés Δt_{Si'} des étapes de changement de vitesses individuelles restant à exécuter SI+1 - S5 (Δt_{SR'} = ΣΔt_{Si'}, i = I+1-5).

9. Procédé selon l'une quelconque des revendications 1 à 8, **caractérisé en ce que** les valeurs mémorisées du temps de changement de vitesses total estimé Δt_{SΣ'} et/ou des temps de changement de vitesses restants estimés Δt_{SR'} et/ou des temps de changement de vitesses partiels estimés Δt_{Si'} sont corrigées en cas d'écart du progrès de changement de vitesses au moyen des valeurs des temps de changement de vitesses effectifs Δt_{SΣ} ou Δt_{SR} ou Δt_{Si}.

10. Procédé selon la revendication 9, **caractérisé en ce que** les valeurs mémorisées des temps de changement de vitesses estimés ΔT_{SΣ'} ou ΔT_{SR'} ou Δt_{Si'} sont remplacées par les valeurs des temps de changement de vitesses effectifs Δt_{SΣ} ou ΔT_{SR} ou Δt_{Si}.

11. Procédé selon la revendication 9, **caractérisé en ce que** les valeurs mémorisées des temps de changement de vitesses estimés ΔT_{SΣ'} ou ΔT_{SR'} ou Δt_{Si'} sont corrigées au moyen d'une fonction de correction avec les valeurs des temps de changement de vitesses effectifs Δt_{SΣ} ou Δt_{SR} ou Δt_{Si}.

12. Procédé selon l'une quelconque des revendications 1 à 11, **caractérisé en ce que** le gradient de vitesse de consigne de départ (dn_{M}/dt)₀ et les gradients de vitesse de consigne corrigés (dn_{M}/dt)ₖₒᵣ sont déterminés de telle sorte que la vitesse du moteur n_{M} atteigne la vitesse synchrone n_{MS} vers la fin de l'avant-dernière étape de changement de vitesses S4.
